# EUROPÄISCHE PATENTSCHRIFT

(11) **EP 2 010 601 B1**
(45) Veröffentlichungstag und Bekanntmachung des Hinweises auf die Patenterteilung: **11.11.2009**
(21) Anmeldenummer: 07724388.9
(22) Anmeldetag: 19.04.2007
(51) Int. Cl.: C08K 13/02

(54) **DÄMMENDER GESCHÄUMTER WERKSTOFF**
FOAM INSULATING MATERIAL
MATÉRIAU EN MOUSSE ISOLANT

(30) Priorität: 21.04.2006 DE 102006018528
(43) Veröffentlichungstag der Anmeldung: 07.01.2009
(73) Patentinhaber: Deutsche Amphibolin-Werke von Robert Murjahn Stiftung & Co KG, 64372 Ober-Ramstadt (DE)
(72) Erfinder: WAGNER, Frank, 69483 Wald-Michelbach (DE); JAGER, Jürgen, 65396 Walluf (DE)
(74) Vertreter: Pfenning, Meinig & Partner GbR
(86) Internationale Anmeldenummer: PCT/EP2007/003451
(87) Internationale Veröffentlichungsnummer: WO 2007/121928

(56) Entgegenhaltungen:
- EP-A- 1 731 552
- WO-A-98/51735

## Beschreibung

Die Erfindung betrifft einen dämmenden geschäumten Werkstoff, der aus athermanen Materialien enthaltenden expandierbaren Styrolpolymerisatpartikeln gebildet ist. Der Werkstoff nach der Erfindung besteht dabei aus sog. Reflektorpartikeln und Absorberpartikeln. Der erfindungsgemäße Werkstoff ist insbesondere in Plattenform vorteilhaft für die Wärmedämmung und dementsprechend für Isolationszwecke an Gebäuden oder auch für andere Applikationen. Außerdem kann mit dem erfindungsgemäßen Werkstoff eine verbesserte Schalldämmung erreicht werden.

Werkstoffe, die aus expandierbaren Styrolpolymerisatpartikeln.gebildet werden, sind an sich nach dem Stand der Technik bekannt. Bei der Herstellung werden dabei expandierbare Partikel, die auch vorexpandiert sein können, innerhalb von so genannten Dampfkammern aufgeschäumt, wobei zumindest eine weitere Expansion der Partikel auftritt. Gleichzeitig tritt eine Verschweißung und Verklebung der entsprechend aufgeschäumten Partikel miteinander auf. Nach einer Abkühlung kann ein so hergestellter Werkstoff aus der Dampfkammer entnommen werden.

Häufig erfolgt die Herstellung solcher Werkstoffe auch innerhalb von Formen, die in den Dampfkammern eingesetzt werden können, so dass auch eine bestimmte Formgebung eines Körpers, der aus einem solchen Werkstoff hergestellt worden ist, erreicht werden kann.

Es werden auch größere Blöcke aus solchen Werkstoffen hergestellt. Diese großformatigen Blöcke können nachfolgend in dünnere Platten zerschnitten werden.

Ein wesentliches Bewertungskriterium für solche Styropor-Werkstoffe ist die physikalische Dichte, wobei mit erhöhten physikalischen Dichten auch eine erhöhte mechanische Festigkeit erreichbar ist, was neben der Bruch-, Druck- auch die Zugfestigkeit betrifft.

Daneben spielt die Wärmeleitfähigkeit eines solchen Werkstoffes eine wesentliche Rolle. Da die Wärmeleitfähigkeit dichteabhängig ist, führt eine Erhöhung der physikalischen Dichte des Werkstoffes zu einer Erniedrigung der Wärmeleitfähigkeit.

Aus Gründen der Materialeinsparung ist es angestrebt, dass Werkstoffe, insbesondere Platten, mit einer geringen Dichte hergestellt werden. Derartige Platten z. B. mit einer Dichte von 15 g/l weisen dann aber eine Wärmeleitfähigkeit auf, die nicht den Anforderungen der Wärmeleitfähigkeitsgruppe (WLG) 035 (nach DIN 18164) entspricht. Eine Einordnung eines Werkstoffes in diese Wärmeleitfähigkeitsgruppe (WLG) ist aber wünschenswert.

Es hat deshalb nicht an Versuchen gefehlt, hier durch Pigmentierung der expandierbaren Styrolpolymerisate eine Abhilfe zu schaffen. In der EP 0 981 574 B1 sind Graphitpartikel enthaltende expandierbare Styrolpolymerisate beschrieben. Diese Styrolpolymerisate, die Graphitpartikel in einer homogenen Verteilung enthalten, zeigen dann, wenn hieraus Schaumstoffe hergestellt werden, eine gute Wärmeisolierung. Nach der Lehre der EP 0 981 574 B1 weisen derartige Schaumstoffe bei einer Dichte von > 10 g/l eine Wärmeleitfähigkeit auf, die unter 0,035 [W/(mxK)] liegt.

Im praktischen Gebrauch hat es sich nun aber gezeigt, dass dann, wenn Platten aus diesem Werkstoff z. B. einer längeren Wärmeeinstrahlung ausgesetzt werden, eine unkontrollierte irreversible thermische Formveränderung erfolgen kann. Diese Formveränderung kann sich insbesondere dann ungünstig auswirken, wenn die Platten zur Wärmedämmung an der Außenfassade eingesetzt werden. Hierbei können sich dann an den Stossstellen Spalten zwischen den Platten bilden. Diese Spalten führen u. a. auch dazu, dass bei einem aufgebrachten Armierputz eine Rissbildung eintreten kann.

Ausgehend hiervon ist es deshalb die Aufgabe der vorliegenden Erfindung, einen dämmenden geschäumten Werkstoff zur Verfügung zu stellen, der in seinen physikalischen Eigenschaften insbesondere in Bezug auf Wärmeleitfähigkeit und Dichte im wesentlichen dem entspricht, wie er in der vorstehend erwähnten europäischen Patentschrift 0 981 547 B1 beschrieben ist, der aber andererseits unter thermischer Beanspruchung keine oder nur geringfügige Veränderungen in der Form aufweist.

Erfindungsgemäß wird die Aufgabe mit einem dämmenden geschäumten Werkstoff, der die Merkmale des Anspruchs 1 aufweist, gelöst. Vorteilhafte Ausgestaltungen und Weiterbildungen der Erfindung können mit den in den untergeordneter Ansprüchen bezeichneten Merkmalen erreicht werden.

Wesentliches Element der vorliegenden Erfindung ist es somit, dass der dämmende geschäumte Werkstoff sog. Reflektorpartikel und Absorberpartikel enthält. Die Reflektorpartikel sind dabei Styrolpolymerisatpartikel mit athermanen Materialien mit überwiegend reflektorischen Eigenschaften. Die Absorberpartikel sind Styrolpolymerisatpartikel mit athermanen Materialien mit überwiegend absorbierenden Eigenschaften. Es hat sich nun überraschenderweise gezeigt, dass ein dämmender geschäumter Werkstoff, der die vorstehend beschriebenen Reflektor- und Absorberpartikel enthält, in Bezug auf seine thermischen Eigenschaften, insbesondere in Bezug auf Formveränderungen, insbesondere gegenüber denen, die im Stand der Technik bekannt sind, überlegen ist. Insbesondere ist bei dem Werkstoff nach der Erfindung darauf hinzuweisen, dass mit dem dämmenden geschäumten Werkstoff nach der Erfindung die Wärmeleitfähigkeit so weit erniedrigt ist, dass sie den Anforderungen einer Wärmeleitfähigkeit < 0,035 [W/(mxK)] 1 nach DIN EN 13163 Teil 1 genügt.

Unter dem Begriff "atherman" im Sinne der Erfindung werden dabei solche Materialien verstanden, die Wärme, und zwar insbesondere Infrarotstrahlung, absorbieren oder reflektieren - also nicht durchlässig sind für Infrarotstrahlen. Die athermanen Materialien können dabei vorzugsweise auf die vorgeschäumten Polystyrolschaumpartikel aufgebracht werden. Das kann auch dadurch geschehen, dass athermane Materialien auf der Oberfläche der.Polystyrolschaumperlen angelagert werden, indem diese außenseitig mit den athermanen Materialien beschichtet oder benetzt werden. Erst anschließend findet eine.Verschweißung der mit den athermanen Materialien versehenen und vorgeschäumten Polystyrolschaumpartikeln zum Werkstoff statt. Andererseits ist es aber auch möglich, dass athermane Materialien dem ungeschäumten Polystyrol zugeführt werden. Dies kann dadurch geschehen, dass das athermane Material als Additiv in das noch nicht aufgeschäumte Polystyrolgranulat eingebettet wird. Diese Einbettung des athermanen Materials in das noch nicht aufgeschäumte Material kann auch zusammen mit anderen Additiven und/oder Treibmitteln erfolgen. Im Endeffekt ist es somit gemäß der vorliegenden Erfindung vorgesehen, dass die athermanen Materialien als Dotierung in den Partikeln selbst und/oder auf der Oberfläche des Partikels angeordnet sind.

Als athermane Materialien kommen infrarotabsorbierende Materialien in Frage, wie z.B. Metalloxide, Nichtmetalloxide, Metallpulver, Aluminiumpulver, Kohlenstoff, z.B. Ruß, Graphit, Diamant oder organische Farbstoffe bzw. Farbstoffpigmente. Die vorstehend genannten Materialien können sowohl jeweils alleine als auch in Kombination, d.h. in Form einer Mischung aus mehreren Materialien Verwendung finden.

Gemäß der vorliegenden Erfindung ist es dabei aber wesentlich, dass zwei Arten von Partikeln, nämlich Reflektorpartikel und Absorberpartikel im dämmenden geschäumten Werkstoff nach der Erfindung enthalten sind.

Die Reflektorpartikel der Erfindung weisen deshalb athermane Materialien mit Spiegelfunktion und/oder Glanz auf. Ein Beispiel hierfür sind Metallpulver.

Bei den Absorberpartikeln sind die athermanen Materialien so ausgewählt, dass hier im wesentlichen solche in Frage kommen, die dunkle und/oder matte Eigenschaften aufweisen, so dass eine möglichst hohe Absorption erreicht wird. Beispiele sind hierfür Ruß und Kohlenstoffpigmente.

Die Menge an athermanem Material muss dabei immer ausreichend sein, um die vorstehend beschriebene beabsichtigte Wirkung zu erhalten.

Der erfindungsgemäße Werkstoff weist dabei bevorzugt 10 bis 90 Gew.-% Absorberpartikel und 90 bis 10 Gew.-% Reflektorpartikel auf. Besonders bevorzugt ist es, wenn der Werkstoff mindestens 30 Gew.-% Absorberpartikel enthält. Besonders gute Ergebnisse werden dann erreicht, wenn sowohl die Absorberpartikel wie auch die Reflektorpartikel in etwa in gleichen Verhältnissen, d.h. zu jeweils ca. 50 % im Werkstoff enthalten sind.

Der erfindungsgemäße Werkstoff kann in Form von Platten oder Blöcken ausgebildet sein und dementsprechend für dämmende Einsatzzwecke eingesetzt werden. Ein besonders bevorzugter Einsatz ist die Wärmedämmung und hier insbesondere die Wärmedämmung an Gebäuden.

In einer vorteilhaften Ausführung der Erfindung ist es vorgesehen, dass die Absorberpartikel unregelmäßig im Werkstoff verteilt angeordnet sind. Es besteht aber auch die Möglichkeit, die Absorberpartikel bzw. die Reflektorpartikel in systematischer Form innerhalb des Werkstoffs anzuordnen.

In einer weiteren Alternative können bei einer systematischen Anordnung der Absorberpartikel in einer bestimmten Einfärbung auch Schichten gebildet werden, um eine lokale gezielte Beeinflussung der mechanischen und thermischen Eigenschaften des Werkstoffs erreichen zu können.

Eine solche Schicht kann beispielsweise mittig innerhalb eines plattenförmigen aus einem erfindungsgemäß hergestellten Werkstoff gebildeten Körpers angeordnet sein. Solche Schichten können auch Oberflächen analog wie Deckschichten, bilden. Selbstverständlich ist es auch möglich, dass auf derartige plattenförmigen Werkstoffen die wie vorstehend beschrieben, auch noch Haftvermittler für den weiteren Schichtaufbau aufgebracht sein.

Der erfindungsgemäße Werkstoff in Plattenform kann auch, da er u. a. auch für die Wärmedämmung vorgesehen ist, mit einer unterschiedlichen Kantenausbildung z. B. nach dem Nut-/Federprinzip versehen sein.

Überraschenderweise hat es sich nun gezeigt, dass der Werkstoff nach der Erfindung z. B. bei einer Rohdichte von ca. 15 bis 17 g/l nicht nur eine Wärmeleitfähigkeit < 0,035 [W/(mxK)] erreicht, sondern dass dieser Werkstoff gleichzeitig keine oder nur unwesentliche Veränderungen auch unter einer längeren thermischen Beanspruchung aufweist. Der Werkstoff nach der vorliegenden Erfindung vereint somit die Vorteile des Werkstoffs der EP 0 981 575 B1 mit den günstigen Eigenschaften in Bezug auf die thermischen Formveränderungen wie sie von pigmentfreien, d.h. von Styroporschaumstoffen bekannt ist.

Durch die vorteilhaften thermischen und mechanischen Eigenschaften des erfindungsgemäßen geschäumten Werkstoffs wirken sich auch auftretende unterschiedliche Wärmeausdehnungen in reduzierter Form aus, so dass auch vermieden werden kann, dass in solchen Fugenbereichen Risse in solchen Beschichtungen oder Überzügen auftreten.

## Patentansprüche

1. Dämmender, geschäumter Werkstoff, der aus athermanen Materialien enthaltenden expandierbaren Styrolpolymerisatpartikeln gebildet ist,
**dadurch gekennzeichnet, dass** er aus Reflektorpartikel, die Styrolpolymerisatpartikel mit athermanen Materialien mit überwiegend reflektorischen Eigenschaften enthalten, und Absorberpartikel, die Styrolpolymerisatpartikeln mit athermanen Materialien mit überwiegend absorbierenden Eigenschaften enthalten, gebildet ist.

2. Werkstoff nach Anspruch 1, **dadurch gekennzeichnet, dass** die athermanen Materialien als Dotierung in den Partikel selbst und/oder auf der Oberfläche des Partikels angeordnet sind.

3. Werkstoff nach Anspruch 1 oder 2, **dadurch gekennzeichnet, dass** die athermanen Materialien aus Materialien ausgewählt sind, die Infrarotstrahlung absorbieren.

4. Werkstoff nach Anspruch 3, **dadurch gekennzeichnet, dass** die athermanen Materialien ausgewählt sind aus Metalloxid, Nicht-Metalloxid, Metallpulver, Aluminiumpulver, Kohlenstoff, organische Farbstoffe und/oder Farbstoffpigmente.

5. Werkstoff nach mindestens einem der Ansprüche 1 bis 4, **dadurch gekennzeichnet, dass** die Reflektorpartikel athermane Materialien mit Spiegelfunktion und/oder Glanz enthalten.

6. Werkstoff nach mindestens einem der Ansprüche 1 bis 4, **dadurch gekennzeichnet, dass** die Absorberpartikel athermane Materialien mit dunklen und/oder matten Eigenschaften enthalten.

7. Werkstoff nach einem der vorhergehenden Ansprüche,
**dadurch gekennzeichnet, dass** er aus 10 bis 90 Gew.-% Absorberpartikel und 90 bis 10 Gew.-% Reflektorpartikel gebildet ist.

8. Werkstoff nach Anspruch 7,
**dadurch gekennzeichnet, dass** er aus mindestens 30 Gew.-% Absorberpartikel gebildet ist.

9. Werkstoff nach mindestens einem der Ansprüche 1 bis 8,
**dadurch gekennzeichnet, dass** die Absorberpartikel unregelmäßig im Werkstoff angeordnet sind.

10. Werkstoff nach mindestens einem der Ansprüche 1 bis 8,
**dadurch gekennzeichnet, dass** die Absorberpartikel systematisch im Werkstoff angeordnet sind.

11. Werkstoff nach mindestens einem der Ansprüche 1 bis 8,
**dadurch gekennzeichnet, dass** die Absorberpartikel ein Muster bildend, angeordnet sind.

12. Werkstoff nach mindestens einem der Ansprüche 1 bis 6,
**dadurch gekennzeichnet, dass** die Absorberpartikel eine Schicht bilden.

13. Werkstoff nach mindestens einem der vorhergehenden Ansprüche,
**dadurch gekennzeichnet, dass** seine Wärmeleitfähigkeit soweit erniedrigt ist, dass sie den Anforderungen der Wärmeleitfähigkeit < 0,035 [W/(mxK)] (nach DIN-EN 13163, Teil 1) genügt.

14. Werkstoff nach mindestens einem der vorhergehenden Ansprüche,
**dadurch gekennzeichnet, dass** er in Plattenform oder Blockform vorliegt.

15. Verwendung des Werkstoffes nach mindestens einem der Ansprüche 1 bis 14 zur Wärmedämmung von Gebäuden und Gebäudeteilen.

## Claims

1. Insulating, foamed material which is formed from expandable styrene polymer particles which contain athermanous materials,
***characterised in that***
it is formed from reflector particles which contain styrene polymer particles with athermanous materials with predominantly reflective properties and absorber particles which contain styrene polymer particles with athermanous materials with predominantly absorbing properties.

2. Material according to claim 1, **characterised in that** the athermanous materials are disposed as doping in the particles themselves and/or on the surface of the particle.

3. Material according to claim 1 or 2, **characterised in that** the athermanous materials are selected from materials which absorb infrared radiation.

4. Material according to claim 3, **characterised in that** the athermanous materials are selected from metal oxide, non-metal oxide, metal powder, aluminium powder, carbon, organic colourants and/or colourant pigments.

5. Material according to at least one of the claims 1 to 4, characteised in that the reflector particles contain athermanous materials with a reflective function and/or gloss.

6. Material according to at least one of the claims 1 to 4, **characterised in that** the absorber particles contain athermanous materials with dark and/or matt properties.

7. Material according to one of the preceding claims,
**characterised in that** it is formed from 10 to 90% by weight absorber particles and 90 to 10% by weight reflector particles.

8. Material according to claim 7,
**characterised in that** it is formed from at least 30% by weight absorber particles.

9. Material according to at least one of the claims 1 to 8,
**characterised in that** the absorber particles are disposed irregularly in the material.

10. Material according to at least one of the claims 1 to 8,
**characterised in that** the absorber particles are disposed systematically in the material.

11. Material according to at least one of the claims 1 to 8,
**characterised in that** the absorber particles are disposed forming a pattern.

12. Material according to at least one of the claims 1 to 6,
**characterised in that** the absorber particles form a layer.

13. Material according to at least one of the preceding claims,
**characterised in that** its heat conductivity is lowered so far that it meets the requirements of heat conductivity < 0.035 [W/(mxK)] (according to DIN-EN 13163, part 1).

14. Material according to at least one of the preceding claims,
**characterised in that** it is present in sheet form or block form.

15. Use of the material according to at least one of the claims 1 to 14 for thermal insulation of buildings and building parts.

## Revendications

1. Matériau expansé isolant, qui est constitué de matières athermanes contenant des particules de polymère de styrène expansibles, **caractérisé en ce qu'**il est constitué de particules réfléchissantes qui contiennent des particules de polymère de styrène comportant des matières athermanes à propriétés essentiellement réfléchissantes, et de particules absorbantes qui contiennent des particules de polymère de styrène comportant des matières athermanes à propriétés essentiellement absorbantes.

2. Matériau selon la revendication 1, **caractérisé en ce que** les matériaux athermanes sont disposés en tant que dopage dans la particule elle-même et/ou sur la surface de la particule.

3. Matériau selon la revendication 1 ou 2, **caractérisé en ce que** les matières athermanes sont choisies parmi des matières qui absorbent le rayonnement infrarouge.

4. Matériau selon la revendication 3, **caractérisé en ce que** les matières athermanes sont choisies parmi un oxyde métallique, un oxyde non métallique, des poudres métalliques, la poudre d'aluminium, le carbone, des colorants organiques et/ou des pigments colorés.

5. Matériau selon au moins l'une des revendications 1 à 4, **caractérisé en ce que** les particules réfléchissantes contiennent des matières athermanes à brillant et/ou fonction de miroir.

6. Matériau selon au moins l'une des revendications 1 à 4, **caractérisé en ce que** les particules absorbantes contiennent des matières athermanes à propriétés mates et/ou foncées.

7. Matériau selon au moins l'une des revendications précédentes, **caractérisé en ce qu'**il est constitué de 10 à 90 % en poids de particules absorbantes et de 90 à 10 % en poids de particules réfléchissantes.

8. Matériau selon la revendication 7, **caractérisé en ce qu'**il est constitué d'au moins 30 % en poids de particules absorbantes.

9. Matériau selon au moins l'une des revendications 1 à 8, **caractérisé en ce que** les particules absorbantes sont disposées irrégulièrement dans le matériau.

10. Matériau selon au moins l'une des revendications 1 à 8, **caractérisé en ce que** les particules absorbantes sont disposées systématiquement dans le matériau.

11. Matériau selon au moins l'une des revendications 1 à 8, **caractérisé en ce que** les particules absorbantes sont disposées en formant un motif.

12. Matériau selon au moins l'une des revendications 1 à 6, **caractérisé en ce que** les particules absorbantes forment une couche.

13. Matériau selon au moins l'une des revendications précédentes, **caractérisé en ce que** sa conductibilité thermique est suffisamment abaissée pour satisfaire aux exigences de la conductibilité thermique < 0,035 [W/(mxK)] (selon DIN-EN 13163, section 1).

14. Matériau selon au moins l'une des revendications précédentes, **caractérisé en ce qu'**il est présent sous forme de blocs ou sous forme de plaques.

15. Utilisation du matériau selon au moins l'une des revendications 1 à 14, pour l'isolation thermique de bâtiments et de parties de bâtiments.
